# EUROPÄISCHE PATENTSCHRIFT

(11) **EP 4 150 700 B1**
(45) Veröffentlichungstag und Bekanntmachung des Hinweises auf die Patenterteilung: **21.02.2024**
(21) Anmeldenummer: 21723705.6
(22) Anmeldetag: 03.05.2021
(51) Int. Cl.: H01M 10/6554

(54) **GEHÄUSEELEMENT FÜR EINEN ELEKTRISCHEN ENERGIESPEICHER EINES KRAFTWAGENS SOWIE KRAFTWAGEN**
HOUSING ELEMENT FOR AN ELECTRICAL ENERGY STORE OF A MOTOR VEHICLE AND MOTOR VEHICLE
ÉLÉMENT DE BOÎTIER POUR UN ACCUMULATEUR D'ÉNERGIE ÉLECTRIQUE D'UN VÉHICULE AUTOMOBILE ET VÉHICULE AUTOMOBILE

(30) Priorität: 13.05.2020 DE 102020112947
(43) Veröffentlichungstag der Anmeldung: 22.03.2023
(73) Patentinhaber: Bayerische Motoren Werke Aktiengesellschaft, 80809 München (DE)
(72) Erfinder: BERGMANN, Clemens, 81669 München (DE); LANG, Jonas, 63811 Stockstadt (DE)
(86) Internationale Anmeldenummer: PCT/EP2021/061601
(87) Internationale Veröffentlichungsnummer: WO 2021/228609

(56) Entgegenhaltungen:
- DE-A1-102012 012 663
- DE-A1-102016 210 530
- DE-A1-102018 202 413
- DE-A1-102018 205 070
- DE-A1-102018 210 307
- DE-A1-102018 210 690

## Beschreibung

Die Erfindung betrifft ein Gehäuseelement für einen elektrischen Energiespeicher eines Kraftwagens gemäß dem Oberbegriff des Patentanspruchs 1. Außerdem betrifft die Erfindung einen Kraftwagen mit wenigstens einem solchen Gehäuseelement.

Die WO 2010/133636 A2 offenbart einen kinetischen Kraftfahrzeugbordnetzenergiespeicher. Außerdem ist der EP 2 284 425 A1 ein Dichtungsrahmen zur Verwendung in einer Batterie als bekannt zu entnehmen.

Aufgabe der vorliegenden Erfindung ist es, ein Gehäuseelement für einen elektrischen Energiespeicher eines Kraftwagens sowie einen Kraftwagen zu schaffen, so dass auf besonders bauraum- und gewichtsgünstige Weise ein besonders vorteilhaftes Unfallverhalten realisiert werden kann.

Diese Aufgabe wird erfindungsgemäß durch ein Gehäuseelement mit den Merkmalen des Patentanspruchs 1 sowie durch einen Kraftwagen mit den Merkmalen des Patentanspruchs 9 gelöst. Vorteilhafte Ausgestaltungen der Erfindung sind Gegenstand der abhängigen Ansprüche.

Ein erster Aspekt der Erfindung betrifft ein Gehäuseelement für ein Speichergehäuse eines zum Speichern von elektrischer Energie ausgebildeten elektrischen Energiespeichers eines Kraftwagens, insbesondere eines Personenkraftwagens. Der Energiespeicher weist in seinem vollständig hergestellten Zustand das Speichergehäuse und somit das Gehäuseelement auf, wobei das Speichergehäuse das Gehäuseelement umfasst. Das Speichergehäuse weist einen Aufnahmeraum auf. Mit anderen Worten ist der Aufnahmeraum durch das Speichergehäuse, insbesondere direkt, begrenzt. Dabei weist der elektrische Energiespeicher, in beziehungsweise mittels welchem elektrische Energie beziehungsweise elektrischer Strom gespeichert werden kann, in seinem vollständig hergestellten Zustand mehrere, einfach auch als Zellen bezeichnete Speicherzellen auf, mittels beziehungsweise in welchen die elektrische Energie zu speichern beziehungsweise gespeichert ist. In vollständig hergestelltem Zustand des Energiespeichers sind die Speicherzellen zumindest teilweise, insbesondere zumindest überwiegend oder vollständig, in dem Aufnahmeraum und somit in dem Speichergehäuse angeordnet. Dabei ist der Aufnahmeraum teilweise durch das Gehäuseelement, insbesondere direkt, begrenzt. Der Energiespeicher ist beispielsweise eine Batterie, insbesondere eine Lithium-Ionen-Batterie, so dass die jeweilige Speicherzelle als Lithiumlonen-Speicherzelle ausgebildet sein kann. Insbesondere ist der Energiespeicher eine Hochvolt-Komponente, deren elektrische Spannung, insbesondere deren elektrische Betriebs- oder Nennspannung, vorzugsweise mindestens 48 Volt beträgt oder vorzugsweise größer als 50 Volt, insbesondere größer als 60 Volt, ist. Insbesondere beträgt die elektrische Spannung, insbesondere die elektrische Betriebsbeziehungsweise Nennspannung, der Hochvolt-Komponente mehrere hundert Volt, um dadurch beispielsweise besonders große elektrische Leistungen zum, insbesondere rein, elektrischen Antreiben des Kraftwagens realisieren zu können. Dabei ist der Kraftwagen beispielsweise als Hybrid- oder als Elektrofahrzeug, insbesondere als batterieelektrisches Fahrzeug (BEV), ausgebildet.

Um nun auf besonders bauraum- und gewichtsgünstige Weise ein besonders vorteilhaftes Unfallverhalten des Speichergehäuses und somit des Energiespeichers und des Kraftwagens insgesamt realisieren zu können, ist es erfindungsgemäß vorgesehen, dass das Gehäuseelement, insbesondere wenigstens oder genau, eine Basisplatte aufweist, welche aus einem Leichtmetall gebildet ist. Hierunter ist insbesondere zu verstehen, dass die Basisplatte aus wenigstens oder genau einem Leichtmetall gebildet ist. Wieder mit anderen Worten ausgedrückt, ist die Basisplatte aus einem Werkstoff gebildet, welche wenigstens oder genau ein Leichtmetall umfasst. Vorzugsweise ist der Werkstoff eine das Leichtmetall umfassende Leichtmetalllegierung. Vorzugsweise ist die Basisplatte als ein Flächenelement ausgebildet, so dass die Basisplatte eine zumindest im Wesentlichen flächige Erstreckung aufweist. Die Basisplatte ist zumindest in einem Teilbereich der Basisplatte mit einer Verstärkungsplatte versehen, welche aus einem Stahl gebildet ist. Dabei ist es vorzugsweise vorgesehen, dass die Verstärkungsplatte eine zumindest im Wesentlichen flächige Erstreckung aufweist und somit als ein weiteres Flächenelement ausgebildet ist. Vorzugsweise ist die Basisplatte und/oder die Verstärkungsplatte einstückig ausgebildet. Durch die Verstärkungsplatte ist die Basisplatte, insbesondere lokal, verstärkt. Die Verstärkungsplatte ist dabei dadurch mit der Basisplatte verbunden, dass die Verstärkungsplatte mittels eines Elastomers mit dem Teilbereich und somit mit der Basisplatte verklebt ist. Mit anderen Worten ist die Verstärkungsplatte mittels des Elastomers an den Teilbereich und somit an die Basisplatte angeklebt, das heißt gegen den Teilbereich und gegen die Basisplatte geklebt. Das elastisch verformbare Elastomer ist somit beispielsweise ein, insbesondere elastisch verformbarer, Elastomer-Klebstoff, mittels welchem die beispielsweise aus Stahlblech gebildete Verstärkungsplatte flächig mit der beispielsweise aus Blech gebildeten Basisplatte verklebt ist.

Mittels der Verstärkungsplatte und mittels des Elastomers lässt sich eine belastungsgerechte Verstärkung der Basisplatte realisieren, so dass sich auf bauraum- und gewichtsgünstige Weise eine besonders hohe, auch als Crash-Festigkeit bezeichnete Unfallfestigkeit des Gehäuseelements und somit des Speichergehäuses und des Energiespeichers insgesamt realisieren lässt. Insbesondere kann eine besonders hohe Unterflur-Unfallfestigkeit des Gehäuseelements und somit des vorzugsweise als Hochvoltspeicher ausgebildeten Energiespeichers realisiert werden. Unter dem Merkmal, dass der Energiespeicher als Hochvoltspeicher ausgebildet sein kann, ist insbesondere zu verstehen, dass der Energiespeicher eine Hochvolt-Komponente sein kann. Unter der Unterflur-Unfallfestigkeit kann insbesondere Folgendes verstanden werden: In vollständig hergestelltem Zustand des Kraftwagens umfasst der Kraftwagen eine selbsttragende Karosserie, durch welche eine auch als Innenraum bezeichneter Fahrgastraum des Kraftwagens zumindest teilweise, insbesondere zumindest überwiegend oder vollständig, begrenzt ist. Der Fahrgastraum wird auch als Fahrgastzelle bezeichnet, wobei sich Personen, wie beispielsweise der Fahrer des Kraftwagens, in dem Fahrgastraum aufhalten können, insbesondere während einer Fahrt des Kraftwagens. Die Karosserie weist dabei einen Boden auf, durch welchen der Fahrgastraum in Fahrzeughochrichtung nach unten hin zumindest teilweise, insbesondere zumindest überwiegend oder vollständig, begrenzt ist. Dabei ist beispielsweise das Gehäuseelement in Fahrzeughochrichtung unterhalb des Bodens, insbesondere unterhalb eines durch den Boden gebildeten Unterbodens der Karosserie, angeordnet und zumindest mittelbar, insbesondere direkt, an dem Boden beziehungsweise Unterboden befestigt. Diese Anordnung und Befestigung des Gehäuseelements an dem Boden oder Unterboden wird auch als unterflurige Anordnung und Befestigung des Gehäuseelements bezeichnet. Da die Basisplatte aus dem Leichtmetall gebildet und mittels der Verstärkungsplatte, insbesondere lokal, verstärkt ist, können ein übermäßiger Bauraumbedarf und ein übermäßiges Gewicht des Gehäuseelements vermieden werden, wobei gleichzeitig eine besonders vorteilhafte Unfallfestigkeit realisiert werden kann. Insbesondere können sowohl eine Wanddicke der Basisplatte als auch eine Wanddicke der Verstärkungsplatte besonders gering gehalten werden, so dass das Gewicht und der Bauraumbedarf des Gehäuseelements in einem besonders geringen Rahmen gehalten werden können.

Es ist denkbar, dass im vollständig hergestellten Zustand des Kraftwagens der Aufnahmeraum teilweise durch das Gehäuseelement und teilweise durch den Boden beziehungsweise durch den Teil des Bodens, insbesondere jeweils direkt, begrenzt ist. Somit ist beispielsweise der Boden beziehungsweise zumindest der Teil des Bodens ein weiteres Gehäuseelement des Speichergehäuses, welches somit das Gehäuseelement und den Boden beziehungsweise zumindest den Teil des Bodens umfassen kann. Da der Boden Bestandteil der auch als Rohbau bezeichneten Karosserie ist, wird dieser Bestandteil der Karosserie als das weitere Gehäuseelement und somit zum Realisieren des Speichergehäuses genutzt. Dadurch kann auf gewichts- und bauraumgünstige Weise der Aufnahmeraum besonders groß gestaltet werden, so dass eine besonders große Speicherkapazität des Energiespeichers dargestellt werden kann.

In vorteilhafter Ausgestaltung der Erfindung ist die Verstärkungsplatte mittels des Elastomers galvanisch von der Basisplatte getrennt. Somit kommt dem Elastomer eine Doppelfunktion zu: Einerseits wird das Elastomer genutzt, um die Verstärkungsplatte mit der Basisplatte zu verkleben, andererseits wird das Elastomer genutzt, um die Verstärkungsplatte galvanisch von der Basisplatte zu trennen. Durch diese Doppelfunktion können das Gewicht und Bauraumbedarf besonders gering gehalten werden.

Um das Gewicht des Gehäuseelements besonders gering zu gehalten, ist es in weiterer Ausgestaltung der Erfindung vorgesehen, dass die maximale Wanddicke der Basisplatte geringer als 5 mm ist.

Das Elastomer bildet beispielsweise eine einfach auch als Zwischenschicht bezeichnete Elastomerzwischenschicht, welche insbesondere dadurch, dass das Elastomer elastisch verformbar ist, elastisch verformbar sein kann. Die Zwischenschicht ist dabei zwischen der Basisplatte und der Verstärkungsplatte angeordnet. Dabei kann die Zwischenschicht einerseits mit der Verstärkungsplatte und andererseits mit der Basisplatte beziehungsweise dem Teilbereich verklebt sein, wodurch die Verstärkungsplatte mittels des Elastomers mit dem Teilbereich und somit mit der Basisplatte verklebt ist. Durch diese Ausgestaltung kann der Bauraumbedarf des Gehäuseelements sowohl durch eine insgesamt besonders geringe, beispielsweise als Blechdicke ausgebildete Wanddicke der Basisplatte und auch der Verstärkungsplatte, als auch durch eine gegenüber herkömmlichen Lösungen verringerte Deformation besonders gering gehalten werden. Ebenso kann das Gewicht des Gehäuseelements durch den belastungsgerechten Einsatz der einfach auch als Verstärkung bezeichneten Verstärkungsplatte besonders gering gehalten werden.

Bei einer besonders vorteilhaften Ausführungsform der Erfindung weist die Basisplatte einen sich an den Teilbereich und die Verstärkungsplatte anschließenden, sich um den gesamten Teilbereich und die gesamte Verstärkungsplatte herumerstreckenden weiteren Teilbereich auf, welcher frei von einem Verstärkungselement ist. Somit ist die Basisplatte mittels der Verstärkungsplatte lediglich lokal verstärkt, wodurch das Gewicht und der Bauraumbedarf des Gehäuseelements insgesamt besonders gering gehalten werden können.

Eine weitere Ausführungsform zeichnet sich dadurch aus, dass das Gehäuseelement Seitenwände aufweist, welche, insbesondere entlang einer Beabstandungsrichtung, voneinander beabstandet sind. Die Seitenwände überragen die Basisplatte und die Verstärkungsplatte, wodurch die Seitenwände und die Verstärkungsplatte den Aufnahmeraum zumindest teilweise begrenzen. Beispielsweise ist der Aufnahmeraum entlang der Beabstandungsrichtung beidseitig durch die Seitenwände jeweils zumindest teilweise begrenzt. In eine senkrecht zur Beabstandungsrichtung verlaufende Begrenzungsrichtung ist der Aufnahmeraum beispielsweise zumindest teilweise durch die Basisplatte und die Verstärkungsplatte begrenzt. Im vollständig hergestellten Zustand des Kraftwagens weist die Begrenzungsrichtung beispielsweise in Fahrzeughochrichtung nach unten. Das Gehäuseelement weist ferner wenigstens eine auch als Querstrebe bezeichnete Strebe auf, welche, insbesondere entlang der Beabstandungsrichtung, zwischen den Seitenwänden angeordnet ist. Außerdem ist die Strebe auf der Basisplatte angeordnet. Die Strebe erstreckt sich, insbesondere entlang der Beabstandungsrichtung, von einer der Seitenwände durchgängig zu der anderen Seitenwand und ist, insbesondere beidenends, mit den Seitenwänden verbunden, wodurch die Seitenwände über die Strebe miteinander verbunden sind. Die Seitenwände und die Strebe bilden somit beispielsweise einen Rahmen, durch welchen auf besonders bauraum- und gewichtsgünstige Weise ein besonders vorteilhaftes Unfallverhalten dargestellt werden kann.

Dabei hat es sich als besonders vorteilhaft gezeigt, wenn die Strebe auf einem Teil des weiteren Teilbereichs angeordnet ist. Dies bedeutet, dass die Strebe neben der Verstärkungsplatte angeordnet ist, insbesondere derart, dass zwischen der Strebe und der Basisplatte nicht die Verstärkungsplatte und vorzugsweise auch kein anderes Verstärkungselement angeordnet ist. Dadurch können der Bauraumbedarf und das Gewicht besonders gering gehalten werden.

In weiterer, besonders vorteilhafter Ausgestaltung der Erfindung ist es vorgesehen, dass die Verstärkungsplatte ausschließlich durch mittels des Elastomers bewirktem Kleben mit der Basisplatte verbunden ist. Dies bedeutet, dass mit Ausnahme des Elastomers keine anderen, zusätzlich Verbindungselemente vorgesehen sind, mittels welchen die Verstärkungsplatte mit der Basisplatte verbunden ist. Dadurch können die Teileanzahl und das Gewicht und die Kosten besonders gering gehalten werden. Schließlich hat es sich als besonders vorteilhaft gezeigt, wenn das Leichtmetall Aluminium ist. Dadurch kann einerseits das Gewicht des Gehäuseelements besonders gering gehalten werden. Andererseits kann ein besonders vorteilhaftes Unfallverhalten gewährleistet werden.

Ein zweiter Aspekt der Erfindung betrifft einen Kraftwagen, welcher wenigstens ein Gehäuseelement gemäß dem ersten Aspekt der Erfindung aufweist. Vorteile und vorteilhafte Ausgestaltungen des ersten Aspekts sind als Vorteile und vorteilhafte Ausgestaltungen des zweiten Aspekts der Erfindung anzusehen und umgekehrt.

Weitere Einzelheiten der Erfindung ergeben sich aus der nachfolgenden Beschreibung eines bevorzugten Ausführungsbeispiels mit den zugehörigen Zeichnungen. Dabei zeigt:
- Fig. 1: eine schematische Perspektivansicht eines erfindungsgemäßen Gehäuseelements für einen elektrischen Energiespeicher eines Kraftwagens;
- Fig. 2: eine schematische Perspektivansicht einer mit Verstärkungsplatten versehenen Basisplatte des Gehäuseelements;
- Fig. 3: eine schematische Schnittansicht der mit den Verstärkungsplatten versehenen Basisplatte;
- Fig. 4: ausschnittsweise eine schematische Perspektivansicht des Gehäuseelements;
- Fig. 5: eine schematische Draufsicht des Gehäuseelements; und
- Fig. 6: eine schematische und perspektivische Unteransicht des Gehäuseelements.

In den Figuren sind gleiche oder funktionsgleiche Elemente mit gleichen Bezugszeichen versehen.

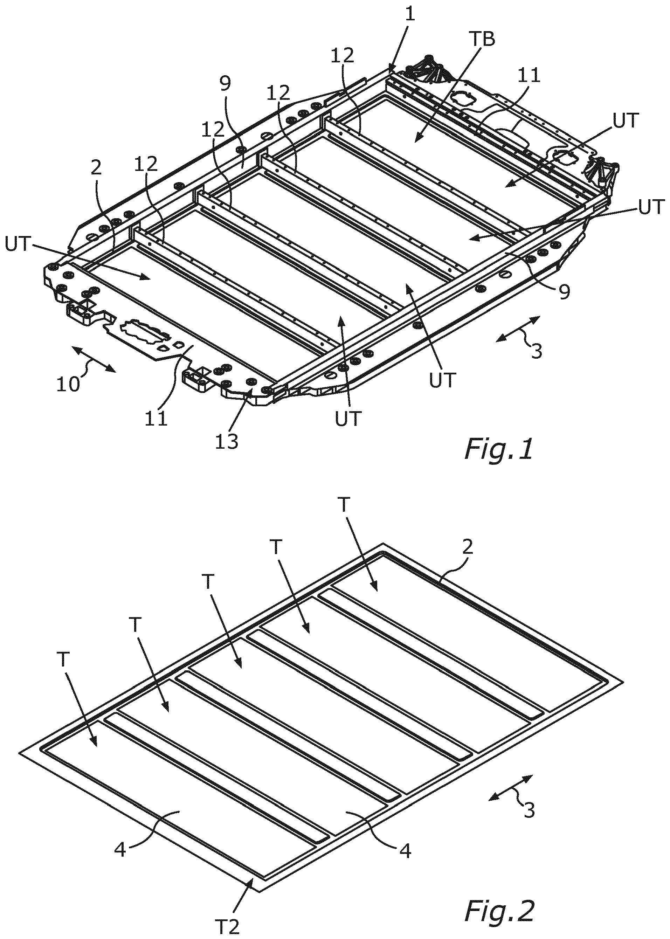

Fig. 1 zeigt in einer schematischen Perspektivansicht, insbesondere in einer schematischen und perspektivischen Draufsicht, ein Gehäuseelement 1 für einen elektrischen Energiespeicher eines Kraftwagens. Dies bedeutet, dass der vorzugsweise als Personenkraftwagen ausgebildete Kraftwagen in seinem vollständig hergestellten Zustand den genannten, elektrischen Energiespeicher aufweist, in beziehungsweise mittels welchem elektrische Energie beziehungsweise elektrischer Strom zu speichern oder gespeichert ist. Der Kraftwagen weist außerdem wenigstens eine elektrische Maschine auf, mittels welcher der Kraftwagen, insbesondere rein, elektrisch angetrieben werden kann. Um den Kraftwagen mittels der elektrischen Maschine anzutreiben, wird die elektrische Maschine in einem Motorbetrieb und somit als Elektromotor betrieben. Hierzu wird die elektrische Maschine mit in dem Energiespeicher gespeicherter elektrischer Energie versorgt. Vorzugsweise sind die elektrische Maschine und der Energiespeicher Hochvolt-Komponenten, deren jeweilige elektrische Spannung, insbesondere elektrische Betriebs- oder Nennspannung, vorzugsweise größer als 50 Volt, insbesondere größer als 60 Volt, ist und ganz vorzugsweise mehrere hundert Volt beträgt. Somit wird der Energiespeicher beispielsweise auch als Hochvoltspeicher bezeichnet.

Der Kraftwagen weist außerdem eine selbsttragende Karosserie auf, welche einen auch als Innenraum bezeichneten Fahrgastraum des Kraftwagens zumindest teilweise begrenzt. Dabei können sich während einer jeweiligen Fahrt des Kraftwagens in dem Fahrgastraum Personen aufhalten. Die Karosserie umfasst dabei einen auch als Karosserieboden bezeichneten Boden, durch welchen der Fahrgastraum in Fahrzeughochrichtung nach unten hin zumindest teilweise, insbesondere zumindest überwiegend oder vollständig, begrenzt ist.

Das zuvor genannte Speichergehäuse des Energiespeichers umfasst das Gehäuseelement 1, welches separat von der Karosserie ausgebildet ist. Des Weiteren umfasst das Speichergehäuse wenigstens ein in den Figuren nicht dargestelltes, weiteres Gehäuseelement, welches beispielsweise, insbesondere integraler, Bestandteil der auch als Rohbau bezeichneten Karosserie ist. Dabei umfasst das weitere Gehäuse beispielsweise einen Teil des genannten Bodens, wobei der Teil des Bodens auch als Bodenelement bezeichnet wird. Die Gehäuseelemente begrenzen den Aufnahmeraum jeweils teilweise, insbesondere derart, dass der Aufnahmeraum durch die Gehäuseelemente vollständig gebildet beziehungsweise begrenzt ist. Dabei weist der Energiespeicher mehrere, einfach auch als Zellen bezeichnete Speicherzellen auf, in denen die elektrische Energie zu speichern beziehungsweise gespeichert ist. Die Speicherzellen sind elektrisch miteinander verbunden und dadurch beispielsweise parallel und/oder seriell miteinander verschaltet. Die Speicherzellen sind dabei jeweils zumindest teilweise, insbesondere zumindest überwiegend oder vollständig, in dem Aufnahmeraum und somit in dem Speichergehäuse angeordnet. Eine erste Anzahl der Speicherzellen ist beispielsweise einem ersten Speichermodul des Energiespeichers zugeordnet, so dass das erste Speichermodul die erste Anzahl der Speicherzellen umfasst. Eine zweite Anzahl der Speicherzellen ist beispielsweise einem zweiten Speichermodul des Energiespeichers zugeordnet, so dass das zweite Speichermodul die zweite Anzahl der Speicherzellen umfasst. Die jeweilige Anzahl ist dabei vorzugsweise größer als 1, insbesondere größer als 2. Dabei kann der Energiespeicher mehrere solcher Speichermodule umfassen, wobei die Speichermodule jeweils zumindest teilweise, insbesondere zumindest überwiegend oder vollständig, in dem Aufnahmeraum und somit in dem Speichergehäuse angeordnet sind.

Das Gehäuseelement 1, welches separat von der Karosserie ausgebildet ist, ist zumindest teilweise, insbesondere zumindest überwiegend oder vollständig, in Fahrzeughochrichtung unterhalb des Bodens angeordnet, insbesondere derart, dass das Gehäuseelement 1 in Fahrzeughochrichtung nach oben hin zumindest teilweise, insbesondere zumindest überwiegend oder vollständig, durch den Boden überdeckt ist. Dabei ist das Gehäuseelement 1 in Fahrzeughochrichtung von unten nach oben zumindest mittelbar, insbesondere direkt, an dem Boden befestigt. Dadurch sind die Gehäuseelemente zusammengesetzt oder zusammengebaut, so dass die Gehäuseelemente den Aufnahmeraum, insbesondere vollständig, bilden beziehungsweise begrenzen. Dadurch, dass zumindest der Teil des Bodens als das weitere Gehäuseelement genutzt wird, kann der Aufnahmeraum bauraum- und gewichtsgünstig geschaffen werden. Außerdem kann der Aufnahmeraum gewichts- und bauraumgünstig besonders groß ausgestaltet werden, so dass eine besonders große Speicherkapazität des Energiespeichers dargestellt werden kann.

Beispielsweise ist der Aufnahmeraum in Fahrzeughochrichtung nach oben hin zumindest teilweise, insbesondere zumindest überwiegend oder vollständig, durch den Boden begrenzt. In Fahrzeughochrichtung nach unten hin ist der Aufnahmeraum zumindest teilweise, insbesondere zumindest überwiegend oder vollständig, durch das Gehäuseelement 1 begrenzt. In Fahrzeuglängsrichtung nach vorne hin kann der Aufnahmeraum zumindest teilweise durch die Karosserie, insbesondere durch den Boden und/oder durch das Gehäuseelement 1 begrenzt sein. Fahrzeuglängsrichtung nach hinten hin kann der Aufnahmeraum zumindest teilweise durch die Karosserie, insbesondere durch den Boden, und/oder durch das Gehäuseelement 1 begrenzt sein.

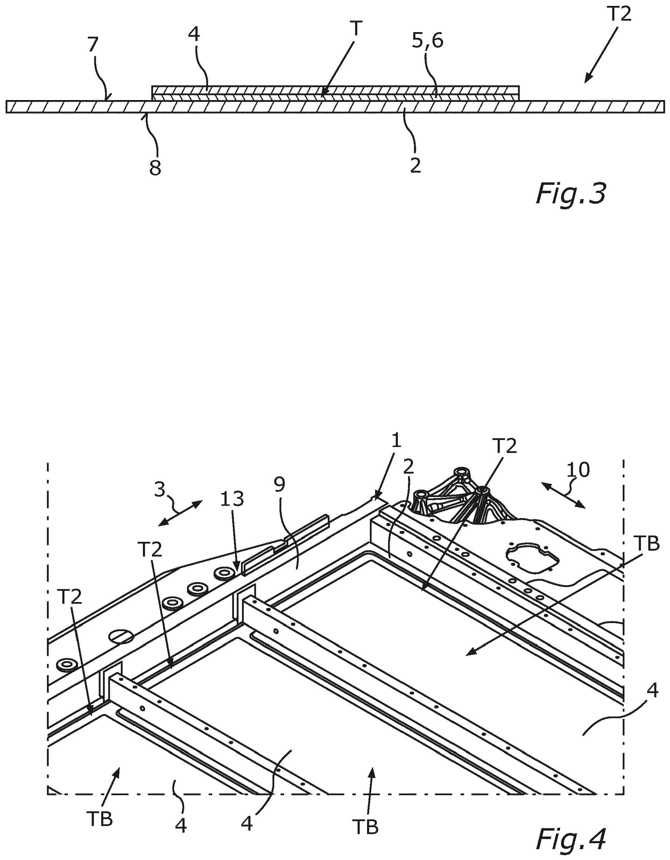

Um nun auf besonders gewichts- und bauraumgünstige Weise ein besonders vorteilhaftes Unfallverhalten des Gehäuseelements 1 und somit des Speichergehäuses und des Energiespeichers insgesamt realisieren zu können, weist das Gehäuseelement 1 - wie besonders gut in Zusammenschau mit Fig. 2 und 3 erkennbar ist - eine Basisplatte 2 auf, welche aus einem Leichtmetall und dabei vorliegend aus einer das Leichtmetall umfassenden Leichtmetalllegierung gebildet ist. Bei dem in den Figuren gezeigten Ausführungsbeispiel ist das Leichtmetall Aluminium, so dass die Leichtmetalllegierung eine Aluminiumlegierung ist. Außerdem ist die Basisplatte 2 bei dem in den Figuren gezeigten Ausführungsbeispiel als ein Flächenelement ausgebildet, so dass die Basisplatte 2 eine besonders im Wesentlichen flächige beziehungsweise zweidimensionale Erstreckung aufweist. Außerdem ist vorzugsweise die Basisplatte 2 einstückig ausgebildet.

Die Basisplatte 2 ist mit einer jeweiligen, entlang einer in Fig. 1 und 2 durch einen Doppelpfeil 3 veranschaulichten Beabstandungsrichtung voneinander beabstandeten und aufeinanderfolgenden Teilbereichen T mit jeweils genau einer, vorzugsweise einstückig ausgebildeten Verstärkungsplatte 4 versehen und dadurch verstärkt. Die jeweilige, vorzugsweise einstückig ausgebildete Verstärkungsplatte 4 ist aus einem Stahl gebildet, wodurch die Basisplatte 2 besonders vorteilhaft verstärkt ist. Wie aus Fig. 3 erkennbar ist, ist die jeweilige Verstärkungsplatte 4 mit dem jeweiligen Teilbereich T der Basisplatte 2 und somit mit der Basisplatte 2 mittels eines Elastomers 5 verklebt. Dabei ist aus Fig. 3 besonders gut erkennbar, dass das Elastomer 5, welches vorzugsweise an sich elastisch verformbar ist, eine insbesondere elastisch verformbare Zwischenschicht 6 bildet, welche zwischen der jeweiligen Verstärkungsplatte 4 und dem jeweiligen Teilbereich T der Basisplatte 2 angeordnet ist. Auch die jeweiligen Zwischenschichten 6 sind nur lokal vorgesehen und somit entlang der durch den Doppelpfeil 3 veranschaulichten Beabstandungsrichtung voneinander beabstandet und aufeinanderfolgend angeordnet. Im vollständig hergestellten Zustand des Kraftwagens fällt die Beabstandungsrichtung beispielsweise mit der Fahrzeuglängsrichtung zusammen. Des Weiteren ist es vorgesehen, dass die jeweilige Verstärkungsplatte 4 mittels des jeweiligen Elastomers 5 galvanisch von der Basisplatte 2 getrennt ist. Außerdem sind die jeweilige Verstärkungsplatte 4 und somit das jeweilige Elastomer 5 auf einer in Fahrzeughochrichtung nach oben weisenden beziehungsweise dem Innenraum zugewandten Oberseite 7 der Basisplatte 2 angeordnet. Die Oberseite 7 ist einer Unterseite 8 der Basisplatte 2 abgewandt, wobei die Unterseite 8 in Fahrzeughochrichtung nach unten weist und somit von dem Aufnahmeraum und von dem Fahrgastraum weg weist.

Auch die jeweilige Verstärkungsplatte 4 ist als Flächenelement ausgebildet und weist somit eine im Wesentlichen flächige Erstreckung auf. Infolge der lokalen Verstärkung der Basisplatte 2 in den jeweiligen Teilbereichen T mittels der jeweiligen Verstärkungsplatten 4 ist es möglich, eine besonders geringe Wanddicke der Basisplatte 2 zu schaffen. Somit ist es vorzugsweise vorgesehen, dass die maximale beziehungsweise größte Wanddicke der Basisplatte 2 geringer als 5 mm ist. Dadurch können der Bauraumbedarf und das Gewicht in einem besonders geringen Rahmen gehalten werden.

Wie besonders gut aus Fig. 2 erkennbar ist, weist die Basisplatte 2, insbesondere je Teilbereich T und somit je Verstärkungsplatte 4, einen jeweiligen, sich an den jeweiligen Teilbereich T und die jeweilige, dortige Verstärkungsplatte 4 anschließenden, sich um den gesamten jeweiligen Teilbereich T und die gesamte jeweilige Verstärkungsplatte 4 herumerstreckenden weiteren Teilbereich T2 auf, welcher frei von einem Verstärkungselement ist. Dadurch ist die Basisplatte 2 mittels der Verstärkungsplatten 4 in den Teilbereichen T lediglich lokal verstärkt, wodurch das Gewicht und der Bauraumbedarf des Gehäuseelements 1 besonders gering gehalten werden können. Wie besonders gut aus Fig. 1 und 3 erkennbar ist, weist das Gehäuseelement 1 Seitenwände 9 auf, welche entlang einer durch einen Doppelpfeil 10 veranschaulichten und senkrecht zur durch den Doppelpfeil 3 veranschaulichten Beabstandungsrichtung verlaufenden, weiteren Beabstandungsrichtung voneinander beabstandet sind. Im vollständig hergestellten Zustand des Kraftwagens fällt die weitere Beabstandungsrichtung mit der Fahrzeugquerrichtung zusammen. Entlang der weiteren Beabstandungsrichtung und somit in Fahrzeugquerrichtung ist der Aufnahmeraum beidseitig jeweils zumindest teilweise durch die Seitenwände 9 begrenzt. Außerdem weist das Gehäuseelement 1 Stirnwände 11 auf, die entlang der durch den Doppelpfeil 3 veranschaulichten, ersten Beabstandungsrichtung voneinander beabstandet sind. Beispielsweise sind die Stirnwände 11 mit den Seitenwänden 9 verbunden. Der Aufnahmeraum ist dabei entlang der durch den Doppelpfeil 3 veranschaulichten, ersten Beabstandungsrichtung und somit in Fahrzeuglängsrichtung beidseitig jeweils zumindest teilweise durch die Stirnwände 11 begrenzt.

Das Gehäuseelement 1 weist außerdem Streben 12 auf, welche auch als Querstreben bezeichnet werden. Die Querstreben sind entlang der weiteren Beabstandungsrichtung zwischen den Seitenwänden 9 und entlang der ersten Beabstandungsrichtung zwischen den Stirnwänden 11 angeordnet und weisen jeweils einen gerade beziehungsweise geradlinigen, in Fahrzeugquerrichtung beziehungsweise entlang der weiteren Beabstandungsrichtung verlaufenden Verlauf auf. Auch die Seitenwände 9 und die Stirnwände 11 weisen einen jeweiligen, geraden beziehungsweise geradlinigen Verlauf auf. Die jeweilige Querstrebe erstreckt sich entlang der weiteren Beabstandungsrichtung von einer der Seitenwände 9 durchgängig bis zur jeweils anderen Seitenwand 9 und ist beidenends an die Seitenwände 9 angebunden, wodurch die Seitenwände 9 über die Querstreben und über die Stirnwände 11 miteinander verbunden sind. Die Seitenwände 9, die Stirnwände 11 und die Streben 12 bilden somit einen Rahmen 13, durch welchen auf besonders bauraum- und gewichtsgünstige Weise ein besonders vorteilhaftes Unfallverhalten realisiert werden kann. Insbesondere ist erkennbar, dass die Seitenwände 9 und die Stirnwände 11 zumindest einen in Fig. 1 mit TB bezeichneten Teil des Aufnahmeraums des Speichergehäuses begrenzen, wobei der Teilbereich TB entlang der durch den Doppelpfeil 3 veranschaulichten, ersten Beabstandungsrichtung beidseitig durch die Stirnwände 11 und entlang der durch den Doppelpfeil 10 veranschaulichten weiteren Beabstandungsrichtung beidseitig durch die Seitenwände 9 begrenzt ist. Die Querstreben sind entlang der ersten Beabstandungsrichtung voneinander und von den Stirnwände 11 beabstandet, wodurch der Teil TB mittels der Querstreben entlang der ersten Beabstandungsrichtung in jeweilige, mehrere Unterteile UT unterteilt ist. Dabei kann vorgesehen sein, dass beispielsweise wenigstens oder genau eines der zuvor genannten Speichermodule in dem jeweiligen Unterteile UT zumindest teilweise aufgenommen ist. Insgesamt ist erkennbar, dass die Unterteile UT Teilräume sind, in die der Teil TB beziehungsweise der Aufnahmeraum insgesamt mittels der Streben 12 unterteilt ist. Außerdem überragen die Seitenwände 9 und die Stirnwände 11 die Basisplatte 2 und die Verstärkungsplatten 4. Insbesondere ist es denkbar, dass die Seitenwände 9 und die Stirnwände 11 auf der Basisplatte 2 angeordnet sind, insbesondere derart, dass die Stirnwände 11 und die Seitenwände 9 die Basisplatte 2 beziehungsweise ihre Oberseite 7 direkt berühren.

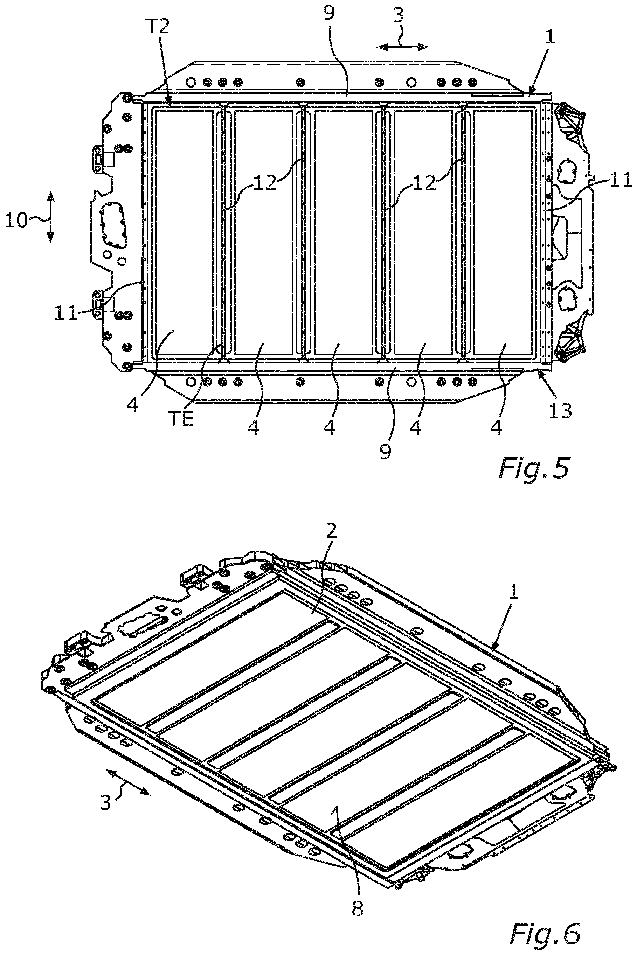

Des Weiteren ist besonders gut aus Fig. 4 und 5 erkennbar, dass die jeweilige Strebe 12 in einem jeweiligen Teil TE des jeweiligen, weiteren Teilbereichs T2 angeordnet ist, so dass zwischen der jeweiligen Strebe 12 und der Basisplatte 2 keine der Verstärkungsplatten 4 angeordnet ist. Dabei ist es denkbar, dass die jeweilige Strebe 12 direkt an der Basisplatte 2 beziehungsweise an deren Oberseite 7 abgestützt ist beziehungsweise anliegt. Außerdem ist vorgesehen, dass die jeweilige, vorzugsweise aus Blech und dabei ganz vorzugsweise aus Aluminiumblech gebildete Verstärkungsplatte 4 ausschließlich durch mittels des jeweiligen Elastomers 5 bewirktem Kleben mit der vorzugsweise aus Stahlblech gebildeten Basisplatte 2 verbunden ist. Dadurch können zusätzliche Verbindungselemente zum Verbinden der jeweiligen Verstärkungsplatte 4 mit der Basisplatte 2 vermieden werden, so dass die Teileanzahl und somit das Gewicht und der Bauraumbedarf besonders gering gehalten werden können.

### Bezugszeichenliste

- 1: Gehäuseelement
- 2: Basisplatte
- 3: Doppelpfeil
- 4: Verstärkungsplatte
- 5: Elastomer
- 6: Zwischenschicht
- 7: Oberseite
- 8: Unterseite
- 9: Seitenwand
- 10: Doppelpfeil
- 11: Stirnwand
- 12: Strebe
- 13: Rahmen
- T: Teilbereich
- T2: Teilbereich
- TB: Teil
- UT: Unterteil

## Patentansprüche

1. Gehäuseelement (1) für ein Speichergehäuse eines zum Speichern von elektrischer Energie ausgebildeten und mehrere, in einem Aufnahmeraum des Speichergehäuses anordenbare Speicherzellen, in welchen die elektrische Energie zu speichern ist, umfassenden elektrischen Energiespeichers eines Kraftwagens, **dadurch gekennzeichnet, dass**
das Gehäuseelement (1) eine aus einem Leichtmetall gebildete Basisplatte (2) aufweist, welche zumindest in einem Teilbereich (T) mit einer aus einem Stahl gebildeten Verstärkungsplatte (4) versehen und dadurch verstärkt ist, die mittels eines Elastomers (5) mit dem Teilbereich (T) der Basisplatte (2) verklebt ist.

2. Gehäuseelement (1) nach Anspruch 1,
**dadurch gekennzeichnet, dass**
die Verstärkungsplatte (4) mittels des Elastomers (5) galvanisch von der Basisplatte (2) getrennt ist.

3. Gehäuseelement (1) nach Anspruch 1 oder 2,
**dadurch gekennzeichnet, dass**
die maximale Wanddicke der Basisplatte (2) geringer als fünf Millimeter ist.

4. Gehäuseelement (1) nach einem der vorhergehenden Ansprüche,
**dadurch gekennzeichnet, dass**
die Basisplatte (2) einen sich an den Teilbereich (T) und die Verstärkungsplatte (4) anschließenden, sich um den gesamten Teilbereich (T) und die gesamte Verstärkungsplatte (4) herumerstreckenden weiteren Teilbereich (T2) aufweist, welcher frei von einem Verstärkungselement ist.

5. Gehäuseelement (1) nach einem der vorhergehenden Ansprüche,
**dadurch gekennzeichnet, dass**
das Gehäuseelement (1) Seitenwände (9) aufweist, welche die Basisplatte (2) und die Verstärkungsplatte (4) überragen, wodurch die Seitenwände (9) und die Verstärkungsplatte (4) den Aufnahmeraum zumindest teilweise begrenzen, wobei zwischen den Seitenwänden (9) und auf der Basisplatte (2) wenigstens eine sich von einer der Seitenwände (9) durchgängig bis zu der anderen Seitenwand (9) erstreckende und dadurch den Aufnahmeraum in zwei Teilräume (UT) unterteilende Strebe (12) angeordnet ist, welche mit den Seitenwänden (9) verbunden ist, wodurch die Seitenwände (9) über die Strebe (12) miteinander verbunden sind.

6. Gehäuseelement (1) nach den Ansprüchen 4 und 5,
**dadurch gekennzeichnet, dass**
die Strebe (12) auf einem Teil (TE) des weiteren Teilbereiches (T2) angeordnet ist.

7. Gehäuseelement (1) nach einem der vorhergehenden Ansprüche,
**dadurch gekennzeichnet, dass**
die Verstärkungsplatte (4) ausschließlich durch mittels des Elastomers (5) bewirktem Kleben mit der Basisplatte (2) verbunden ist.

8. Gehäuseelement (1) nach einem der vorhergehenden Ansprüche,
**dadurch gekennzeichnet, dass**
das Leichtmetall Aluminium ist.

9. Kraftwagen, mit wenigstens einem Gehäuseelement (1) nach einem der vorhergehenden Ansprüche.

## Claims

1. Housing element (1) for a storage housing of an electrical energy store of a motor vehicle, the electrical energy store being designed to store electrical energy and comprising a plurality of storage cells which can be arranged in a receiving space of the storage housing, **characterized in that** the housing element (1) has a baseplate (2) which is formed from a light metal and which is provided, at least in a subregion (T), with a reinforcing plate (4) formed from a steel and is reinforced by being adhesively bonded to the subregion (T) of the baseplate (2) by means of an elastomer (5).

2. Housing element (1) according to Claim 1,
**characterized in that**
the reinforcing plate (4) is separated galvanically from the baseplate (2) by means of the elastomer (5).

3. Housing element (1) according to Claim 1 or 2,
**characterized in that**
the maximum wall thickness of the baseplate (2) is smaller than 5 millimeters.

4. Housing element (1) according to one of the preceding claims,
**characterized in that**
the baseplate (2) has a further subregion (T2) which adjoins the subregion (T) and the reinforcing plate (4), extends around the entire subregion (T) and the entire reinforcing plate (4) and is free from a reinforcing element.

5. Housing element (1) according to one of the preceding claims,
**characterized in that**
the housing element (1) has sidewalls (9) which protrude over the baseplate (2) and the reinforcing plate (4), as a result of which the sidewalls (9) and the reinforcing plate (4) at least partially delimit the receiving space, wherein at least one strut (12) is arranged between the sidewalls (9) and the baseplate (2), the strut extending continuously from one of the sidewalls (9) as far as the other sidewall (9) and thereby dividing the receiving space into two subspaces (UT) and which strut is connected to the sidewalls (9), the sidewalls (9) thus being connected to one another via the strut (12).

6. Housing element (1) according to Claims 4 and 5,
**characterized in that**
the strut (12) is arranged on one part (TE) of the further subregion (T2).

7. Housing element (1) according to one of the preceding claims,
**characterized in that**
the reinforcing plate (4) is connected to the baseplate (2) exclusively by adhesive bonding brought about by means of the elastomer (5).

8. Housing element (1) according to one of the preceding claims,
**characterized in that**
the light metal is aluminum.

9. Motor vehicle, having at least one housing element (1) according to one of the preceding claims

## Revendications

1. Élément de boîtier (1) pour un boîtier d'accumulateur d'un accumulateur d'énergie électrique d'un véhicule automobile configuré pour accumuler de l'énergie électrique et comprenant plusieurs cellules d'accumulateur pouvant être agencées dans un espace de réception du boîtier d'accumulateur, dans lesquelles l'énergie électrique doit être accumulée, **caractérisé en ce que**
l'élément de boîtier (1) présente une plaque de base (2) formée d'un métal léger, qui est pourvue au moins dans une zone partielle (T) d'une plaque de renforcement (4) formée d'un acier et ainsi renforcée, qui est collée au moyen d'un élastomère (5) à la zone partielle (T) de la plaque de base (2).

2. Élément de boîtier (1) selon la revendication 1, **caractérisé en ce que** la plaque de renforcement (4) est séparée galvaniquement de la plaque de base (2) au moyen de l'élastomère (5).

3. Élément de boîtier (1) selon la revendication 1 ou 2, **caractérisé en ce que** l'épaisseur de paroi maximale de la plaque de base (2) est inférieure à cinq millimètres.

4. Élément de boîtier (1) selon l'une quelconque des revendications précédentes, **caractérisé en ce que** la plaque de base (2) présente une autre zone partielle (T2) se raccordant à la zone partielle (T) et à la plaque de renforcement (4), s'étendant autour de l'ensemble de la zone partielle (T) et de l'ensemble de la plaque de renforcement (4), qui est exempte d'un élément de renforcement.

5. Élément de boîtier (1) selon l'une quelconque des revendications précédentes, **caractérisé en ce que** l'élément de boîtier (1) présente des parois latérales (9) qui dépassent de la plaque de base (2) et de la plaque de renforcement (4), moyennant quoi les parois latérales (9) et la plaque de renforcement (4) délimitent au moins partiellement l'espace de réception ; entre les parois latérales (9) et sur la plaque de base (2) étant agencée au moins une entretoise (12) s'étendant de manière continue de l'une des parois latérales (9) jusqu'à l'autre paroi latérale (9) et divisant ainsi l'espace de réception en deux espaces partiels (UT), laquelle est reliée aux parois latérales (9), les parois latérales (9) étant ainsi reliées entre elles par l'entretoise (12).

6. Élément de boîtier (1) selon les revendications 4 et 5, **caractérisé en ce que** l'entretoise (12) est agencée sur une partie (TE) de l'autre zone partielle (T2).

7. Élément de boîtier (1) selon l'une quelconque des revendications précédentes, **caractérisé en ce que** la plaque de renforcement (4) est reliée à la plaque de base (2) exclusivement par collage réalisé au moyen de l'élastomère (5).

8. Élément de boîtier (1) selon l'une quelconque des revendications précédentes, **caractérisé en ce que** le métal léger est l'aluminium.

9. Véhicule automobile, avec au moins un élément de carrosserie (1) selon l'une quelconque des revendications précédentes.
